# DEMANDE DE BREVET EUROPEEN

(11) **EP 1 031 599 A1**
(43) Date de publication de la demande: **30.08.2000**
(21) Numéro de dépôt: 00450001.3
(22) Date de dépôt: 22.02.2000
(51) Int. Cl.: C08J 7/04, B29C 43/36, B29C 33/64, B32B 25/20

(54) **Procédé de protection de membranes souples en silicone, notamment dans le cas de moulage par transfert de résine**

(30) Priorité: 23.02.1999 FR 9902382
(71) Demandeur: Aerospatiale Matra Airbus S.A., 75781 Paris Cedex 16 (FR)
(72) Inventeur: Fournier, Alain, 31470 Saint Lys (FR)
(74) Mandataire: Thébault, Jean-Louis

(57) **Abrégé**

L'objet de l'invention concerne un procédé de traitement de membranes souples en silicone auto-démoulant utilisées comme contre-forme notamment pour le moulage par transfert de résine, caractérisé en ce que ladite membrane est enduite d'une couche barrière mince d'un mélange de composés à groupements silicones de type monoconstituant ou d'un composé à groupements silicones de type monoconstituant.

## Description

La présente invention concerne un procédé de protection de membranes souples en silicone bi-constituant, plus particulièrement les membranes souples en silicones auto-démoulants, notamment dans le cas de la mise en oeuvre de moulages par transfert de résine.

Un silicone bi-constituant a la formule générale suivante lorsqu'il est obtenu par polyaddition :

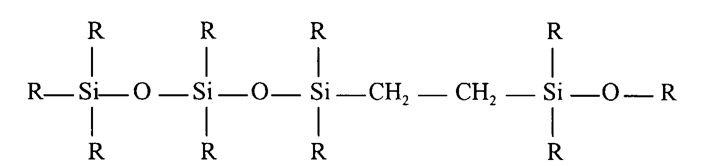

Le moulage par transfert de résine consiste à préparer des formes ayant des faces en vis à vis générant un volume au profil de la pièce à réaliser, à disposer sur les parois de ce volume une membrane souple en silicone pour permettre le démoulage de la pièce finie et à injecter dans l'espace délimité par ladite membrane de la résine et son catalyseur de polymérisation. Les parois du moule peuvent être chauffantes afin de maîtriser mieux encore la réaction de polymérisation.

Ce procédé est très utilisé dans l'industrie automobile et dans le domaine des sports et loisirs. Ce procédé permet d'obtenir de meilleures performances techniques, de réduire les cycles de fabrication.

Réservé initialement à des pièces de petites dimensions, ce procédé tend à se généraliser et à trouver des applications y compris pour la fabrication de pièces de structures de grandes dimensions comme dans le domaine de l'aéronautique.

De plus, les résines injectées sont de type phénolique et présentent des avantages particulièrement intéressants dans ce domaine de l'aéronautique car elles sont auto-extinguibles et la fumée dégagée, en faible volume, n'est pas nocive.

Chaque résine est livrée avec son catalyseur et on connaît plus particulièrement l'un d'entre eux qui contient de l'acide para-toluène sulfonique.

La membrane souple en silicone auto-démoulant présente de nombreuses qualités qui sont essentielles pour la bonne mise en oeuvre du procédé. Il n'y a pas d'usinage, elle est facile à démouler puisqu'il suffit de tirer sur la membrane pour la "peler" par rapport à la pièce et l'état de surface de la pièce obtenue est excellent.

Par contre, cette membrane présente un inconvénient important : au contact de la résine, la membrane se corrode. Cette corrosion a pour effet de dégrader l'état de surface et d'en accentuer le phénomène au fur et à mesure des utilisations successives.

Ce vieillissement prématuré fait perdre à la membrane toutes ses qualités de démoulage et conduit, par conséquent, à diminuer la qualité d'état de surface de la pièce. Ce fait oblige l'utilisateur à procéder au remplacement fréquent de la membrane, remplacement qui est donc préjudiciable à la rentabilité du procédé de moulage par transfert de résine.

L'objet de l'invention est de proposer un procédé de traitement de la membrane souple en silicone auto-démoulant pour éviter la dégradation prématurée et pour augmenter le potentiel d'utilisation. Ce traitement doit permettre de conserver les qualités de démoulage, le bon état de surface de la pièce réalisée, ce qui va de pair généralement, en évitant d'augmenter de façon substantielle les épaisseurs.

A cet effet, l'invention porte sur un procédé de traitement de membranes souples en silicone auto-démoulant utilisées comme contre-forme notamment pour le moulage par transfert de résine, qui se caractérise en ce que ladite membrane est enduite d'une couche barrière mince d'un mélange de composés à groupements silicones de type monoconstituant ou d'un composé à groupements silicones de type monoconstituant.

Ce composé à groupements silicones est plus particulièrement du type monoconstituant.

Selon un mode préférentiel, ce composé est polymérisé à l'air, en présence d'eau sous forme d'humidité et à température ambiante.

Cette couche barrière mince est préférentiellement déposée sur une membrane neuve.

La présente invention est maintenant décrite en détail et illustrée d'exemples.

On a noté qu'une des explications possibles de cette corrosion pouvait être l'action des groupes phénol de la résine sur une des molécules de la membrane souple en silicone.

L'équation chimique simplifiée d'une telle réaction peut s'écrire de la façon suivante :

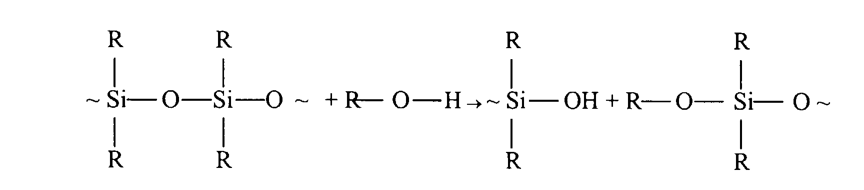

On note la rupture de la chaîne silicone qui marque la dégradation de la membrane souple.

Le catalyseur acide permet l'amorce de la dégradation par la rupture de la chaîne des groupes silicones et il accélère la dégradation des membranes.

On note ainsi une forte diminution des capacités de démoulage de la membrane qui devient, au fur et à mesure des utilisations, de plus en plus difficile à décoller de la pièce ce qui engendre simultanément une dégradation de l'état de surface de ladite pièce.

La dégradation est initiée sur des zones limitées et se propage rapidement à la totalité de la surface de la membrane.

Des statistiques montrent que ces membranes permettent environ une douzaine d'utilisations.

Une solution consiste à diminuer le pouvoir agressif du catalyseur mais les résultats obtenus ont été peu probants et les possibilités de modification sont relativement réduites car il faut lui conserver ses qualités premières d'initiateur et d'entretien de la réaction de polymérisation.

Le procédé selon l'invention consiste à disposer entre la membrane souple silicone et la résine une interface sous forme d'une couche mince d'un produit barrière qui supprime le contact entre la résine et la membrane souple.

Les problèmes soulevés par une telle application d'un produit complémentaire sont essentiellement l'adhérence de ce produit sur la membrane souple en silicone auto-démoulant et les qualités de démoulage, ceci tout en ne modifiant l'épaisseur que dans des valeurs quasi négligeables pour ne pas changer les cotes des pièces.

Un produit adapté à une telle application est un silicone monoconstituant de formule générale :

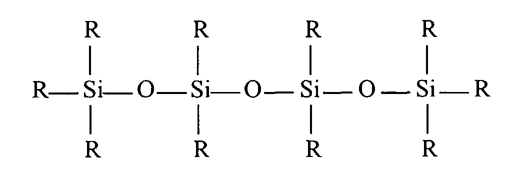

un tel produit peut aussi présenter d'autres caractéristiques avantageuses et notamment on connaît des produits ayant l'eau pour catalyseur et ceci dans des quantités très faibles puisque l'humidité de l'air est suffisante. Avantageusement, ce silicone monoconstituant peut aussi polymériser à température ambiante, rapidement, en sorte de permettre une application dans des conditions simples et donc peu coûteuses.

Un tel produit est notamment commercialisé sous la dénomination Rhodorsil Caf 4 par la société Rhône Poulenc.

Un tel silicone monoconstituant présente l'avantage d'être de la même nature que le silicone souple auto-démoulant, ce qui permet une bonne adhérence. On note néanmoins que ce silicone monoconstituant ne pénètre pas dans la membrane car les interactions au niveau atomique s'opèrent en surface et sont suffisamment rapides pour éviter d'atteindre les couches plus profondes.

Ceci est un avantage important car dès que cette couche de silicone monoconstituant est dégradée par la résine, car étant de la même famille elle subit également les agressions combinées de la résine et du catalyseur, cette couche se dissocie de la membrane support par simple traction, comme une peau indépendante. En effet, les liaisons atomiques entre les deux silicones se fragilisent sous l'effet de corrosion.

La couche mince de silicone monoconstituant peut ainsi être retirée pour être remplacée par une nouvelle couche barrière, ce qui évite la superposition de couches et donc l'augmentation de l'épaisseur de la membrane de silicone auto-démoulant.

On note que le produit ainsi réalisé qui est constitué d'une membrane souple en silicone auto-démoulant enduit d'une couche mince barrière en silicone monoconstituant présente d'autres avantages :
- les qualités de démoulage sont conservées puisqu'il s'agit d'un silicone dont les capacités anti-adhérentes sont connues,
- la membrane souple est protégée pendant plusieurs utilisations successives,
- les qualités d'état de surface sont de façon surprenante, améliorées. Ceci peut être expliqué par le fait que la couche barrière mince épouse l'état de surface de cette membrane tout en gommant les défauts de surface car il y a comblement des éventuelles dépressions.

La mise en oeuvre industrielle propose différents modes d'application de cette couche barrière mince car un tel produit se présente à l'état de pâte visqueuse ce qui autorise un beurrage à l'état pâteux de la surface concernée de la membrane ou une enduction par vaporisation du produit dilué avec le solvant adapté à ce produit. Comme pour tous ces types de produits, l'ajustement de la viscosité permet de contrôler l'épaisseur de la couche mince.

On sait que la mise en oeuvre du moulage par transfert de résine est coûteux car ce dernier nécessite des investissements lourds comme des machines d'injection équipées de moyens de chauffage, des postes de travail, des outillages chauffants, des outillages permanents comme les formes métalliques et des outillages renouvelables comme les contre-formes que sont les membranes souples en silicone auto-démoulant.

Il est donc très intéressant de pouvoir conserver les membranes pour un grand nombre d'applications successives. Des essais ont montré que les membranes pouvaient être utilisées deux fois plus longtemps tout en obtenant des produits sensiblement de même qualité qu'avec une membrane neuve, la dégradation au fur et à mesure des utilisations étant tout à fait acceptable.

Ainsi l'analyse de photographies d'une membrane neuve montre une surface lisse et sans relief.

Cette même membrane montre des granulosités après mise en contact avec la résine, même simplement à température ambiante et à l'air libre, c'est-à-dire dans des conditions d'agressivité réduite.

Après 2 utilisations, un dépôt blanchâtre commence à apparaître.

Après 4 utilisations, le relief prend naissance.

Après 8 utilisations, le relief est important et la membrane n'est plus utilisable de façon industrielle.

Si les applications sont poursuivies, outre les difficultés de mise en oeuvre, il est impossible de dépasser 12 utilisations.

A ce stade, la membrane corrodée est enduite de silicone monoconstituant et il est possible de procéder à 6 utilisations supplémentaires.

La couche barrière mince de silicone monoconstituant est retirée et renouvellée, ce qui autorise encore 4 utilisations supplémentaires.

Néanmoins, bien que la couche mince atténue le relief, ces conditions d'applications a posteriori sur la membrane, après dégradation, sont défavorisantes.

Dans le cas d'une application a priori, sur une membrane neuve, une première application permet de réaliser 7 cycles de fabrication.

Après retrait de cette première couche barrière mince et application d'une couche barrière mince neuve, 8 cycles sont menés avec un état de surface tout à fait amélioré et un nouveau retrait suivi d'une nouvelle application permet de conduire 7 cycles supplémentaires.

A l'issue de ces 22 cycles, il est possible :
- soit de changer la membrane souple qui commence à être dégradée si l'utilisateur souhaite conserver un état de surface et des capacités de démoulage optimales,
- soit de poursuivre si la qualité de l'état de surface acceptable est à un niveau inférieur.

On constate qu'il est donc préférable de traiter les membranes souple avant que la corrosion ne les atteignent, donc à l'état neuf, et qu'il faut changer la couche barrière mince avant que sa dégradation ne permettent aux agents agressifs d'atteindre la membrane souple pour la corroder à son tour.

Dans les exemples donnés, un seul composé à groupement silicone monoconstituant a été cité en exemple et utilisé dans les essais mais il est possible dans certains cas, en fonction de la nature du silicone auto-démoulant de la membrane, de recourir à un mélange de plusieurs composés silicones monoconstituants.

## Revendications

1. Procédé de traitement de membranes souples en silicone auto-démoulant utilisées comme contre-forme notamment pour le moulage par transfert de résine, caractérisé en ce que ladite membrane est enduite d'une couche barrière mince d'un mélange de composés à groupements silicones de type monoconstituant ou d'un composé à groupements silicones de type monoconstituant.

2. Procédé de traitement de membranes selon la revendication 1, caractérisé en ce que la couche barrière mince est un composé à groupements silicones de type monoconstituant.

3. Procédé de traitement de membranes selon la revendication 2, caractérisé en ce que le composé à groupements silicones est polymérisé à l'air, en présence d'eau sous forme d'humidité.

4. Procédé de traitement de membranes selon la revendication 2 ou 3, caractérisé en ce que le composé à groupements silicones est polymérisé à température ambiante.

5. Procédé de traitement de membranes selon la revendication 1 ou 2, caractérisé en ce que la couche barrière mince est déposée sur une membrane neuve.
